# EUROPÄISCHE PATENTSCHRIFT

(11) **EP 2 502 725 B1**
(45) Veröffentlichungstag und Bekanntmachung des Hinweises auf die Patenterteilung: **07.01.2015**
(21) Anmeldenummer: 11185239.8
(22) Anmeldetag: 14.10.2011
(51) Int. Cl.: B29C 65/18, B31B 1/64, B29D 23/20, B29C 65/26, B29C 65/32, B29C 53/04

(54) **Vorrichtung und Verfahren zum Herstellen von Tubenkörpern**
Device and method for manufacturing tubular bodies
Dispositif et procédé de fabrication de corps tubulaires

(30) Priorität: 24.03.2011 DE 102011001547; 24.03.2011 DE 102011001546; 10.06.2011 DE 202011050418 U; 10.06.2011 DE 202011050417 U
(43) Veröffentlichungstag der Anmeldung: 26.09.2012
(73) Patentinhaber: PackSys Global (Switzerland) Ltd., 8630 Rüti (CH)
(72) Erfinder: Esser, Ulrich, 8630 Rüti (CH)
(74) Vertreter: Wagner, Kilian

(56) Entgegenhaltungen:
- CH-A5- 695 937
- DE-A1- 4 315 067
- DE-B3- 10 352 700
- FR-A- 1 418 537

## Beschreibung

Die Erfindung betrifft eine Vorrichtung zum Herstellen von Tubenkörpern für Verpackungstuben aus einer schweißbaren Substratbahn gemäß dem Oberbegriff des Anspruchs 1, mit einem sich in eine Axialrichtung erstreckenden, langgestreckten Dorn, um welchen die Substratbahn, insbesondere ein Kunststofflaminat, ggf. mit einer Metallisierung oder Metallschicht zur Herstellung einer Rohrform umformbar ist, und mit Schweißmitteln zum Verschweißen der Substratbahn sowie mit mindestens einem entlang einer ersten Oberfläche umlaufend antreibbaren Schweißband. Ferner betrifft die Erfindung ein Verfahren zum Herstellen von Tubenkörpern für Verpackungstuben aus einer Substratbahn mit einer solchen Vorrichtung gemäß dem Oberbegriff des Anspruchs 13.

Bekannte Vorrichtungen zum Herstellen von Tubenkörpern umfassen ein inneres und ein äußeres, jeweils umlaufend antreibbares Schweißband, zwischen denen die Substratbahn sandwichartig aufnehmbar und klemmbar ist. Die Schweißbänder haben u. a. die Aufgabe, für einen gleichmäßigen Wärmeeintrag beim Durchlaufen von, meist eine Hochfrequenzschweißeinrichtung umfassenden, Schweißmittel zu sorgen. Darüber hinaus dienen die Schweißbänder dazu, in einem dem Schweißschritt nachgelagerten Kühlschritt gleichmäßig Wärmeenergie zum Aushärten der Schweißnaht zu entziehen. Zudem fixieren sie die Rohrform und schützen die frische Schweißnaht. Anstelle von zwei Schweißbändern ist es denkbar, nur ein Schweißband vorzusehen, wenn das Substratband auf einer dem einzigen Schweißband abgewandten Seite gegen eine ortsfeste Andruckfläche drückt. Nachteilig bei der letzten Ausführung ist die erhöhte Reibung.

Bei bekannten Vorrichtungen ist zur Reibungsminimierung zwischen dem mindestens einen, im Regelfall aus Stahl ausgebildeten, Schweißband und einer ortsfesten Oberfläche, entlang der das Schweißband transportiert wird, insbesondere eine Dornoberfläche oder eine Oberfläche einer Kühleinheit, ein PTFE-Streifen vorgesehen, der eine Dickenerstreckung von etwa 100 µm aufweist. Der PTFE-Streifen unterliegt einem natürlichen Reibverschleiß und muss daher regelmäßig ausgetauscht werden. Darüber hinaus ist der Wärmeübergang zwischen der dem Schweißband zugeordneten Oberfläche und dem Schweißband aufgrund der Dickenerstreckung des PTFE-Streifens verbesserungswürdig.

Aus der fachfremden DE 103 52 700 B3 ist eine Prägestation für eine Prägevorrichtung bekannt, bei der ein Prägeband mit einem Luftkissen beaufschlagt ist, wobei eine Abkühlung des Prägebandes während des Prägevorgang durch das Druckgans des Gaskissens vernachlässigbar klein ist.

Ausgehend von dem vorgenannten Stand der Technik liegt der Erfindung die Aufgabe zugrunde, eine verbesserte Vorrichtung zum Herstellen von Tubenkör pern anzugeben, die sich durch eine höhere Standzeit auszeichnet. Bevorzugt soll auch der Wärmeenergieübergang zwischen einer dem Schweißband zugeordneten, feststehenden Oberfläche und dem Schweißband zur Gewährleistung eines verbesserten Wärmeeintrags in die Substratbahn und/oder eines verbesserten Wärmeentzugs aus der Substratbahn optimiert werden. Ferner besteht die Aufgabe darin, ein entsprechend verbessertes Verfahren zum Herstellen von Tubenkörpern anzugeben.

Diese Aufgabe wird hinsichtlich der Vorrichtung mit den Merkmalen des Anspruchs 1 gelöst und bei einer gattungsgemäßen Vorrichtung insbesondere dadurch, dass in der ersten Oberfläche Gasaustrittsöffnungen vorgesehen sind, durch die Gas zum Erzeugen eines Gaskissens zwischen der Oberfläche und dem mindestens einem Schweißband austreten kann. Hinsichtlich des Verfahrens wird die Aufgabe mit den Merkmalen des Anspruchs 13 gelöst. Vorteilhafte Weiterbildungen der Erfindung sind in den Untersprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, das mindestens eine Schweißband auf einem Gaskissen zu lagern bzw. zwischen der feststehenden, mit einer auf einer von der Substratbahn abgewandten Seite des Schweißbandes angeordneten Oberfläche und dem relativ zu dieser Oberfläche bewegten Schweißband ein Gaskissen, insbesondere ein Luftkissen zu erzeugen, indem in der Oberfläche Gasaustrittsöffnungen vorgesehen sind, durch die hindurch Gas, insbesondere Druckluft, gefördert werden kann. Durch die Realisierung des Gaskissens zur Lagerung des Schweißbandes kann bevorzugt auf einen im Stand der Technik vorgesehenen PTFE-Streifen zur Reibungsminimierung verzichtet werden. Darüber hinaus ist es möglich, den Abstand zwischen dem Schweißband und der ersten Oberfläche im Vergleich zu einer PTFE-Streifen-Lösung zu minimieren, was sich positiv auf den Wärmeübergang auswirkt. Durch die Realisierung eines Gaskissens kann zudem die Staubkontamination des Tubenrohrinneren reduziert werden. Im bevorzugten Fall des Vorsehens von zwei Schweißbändern, nämlich einem inneren, an der Innenseite der Rohrform anliegenden Schweißband und einem äußeren, an einer Außenseite der Rohrform anliegenden Schweißband ist es bevorzugt, jedoch nicht zwingend, beide Schweißbänder mittels Gaskissen, d.h. einem inneren und/oder einem äußeren Gaskissen zu lagern. Im Falle des Vorsehens nur eines einzigen Schweißbandes ist dieses, zumindest abschnittsweise, erfindungsgemäß mittels eines Gaskissens (inneres oder äußeres Gaskissen) zu lagern.

Besonders zweckmäßig ist es, wenn die Gasaustrittsöffnungen derart angeordnet sind, dass das diesen zugeordnete Schweißband unmittelbar mit dem aus durch die Gasaustrittsöffnungen austretenden Gas anströmbar ist. Anders ausgedrückt befinden sich die Gasaustrittsöffnungen bevorzugt unmittelbar unterhalb der der Substratbahn abgewandten Schweißbandseite.

Zur Erzeugung des mindestens einen Gaskissens ist es bevorzugt, wenn den Gasaustrittsöffnungen Druckgasmittel, insbesondere Druckluftmittel, zugeordnet sind, mit denen die Gasaustrittsöffnungen mit einem Gasvolumenstrom, insbesondere einem Druckluftvolumenstrom, beaufschlagbar sind. Im Hinblick auf die konkrete Ausgestaltung der Druckgasmittel gibt es unterschiedliche Möglichkeiten. So kann es sich im einfachsten Fall um Druckgasflaschen, insbesondere Druckluftflaschen, handeln, die über eine entsprechende Gasleitung gasleitend mit den Gasaustrittsöffnungen verbunden sind. Bevorzugt umfassen die Druckgasmittel einen Druckgaskompressor, insbesondere einen Druckluftkompressor, welchem zur Vergleichmäßigung des Gasvolumenstroms ein Druckgasspeicher, insbesondere ein Druckgastank, nachgeordnet ist. Durch die Einstellung des Gasdruckes ist es möglich, die Dickenerstreckung des Gaskissens einzustellen sowie Einfluss zu nehmen auf den Wärmeübergang zwischen der die Gasaustrittsöffnungen aufweisenden Oberfläche und dem Schweißband.

Im Hinblick auf die Ausbildung der Gasaustrittsöffnungen gibt es unterschiedliche Möglichkeiten. Grundsätzlich ist es möglich, die Gasaustrittsöffnungen als diskrete, bevorzugt mechanisch hergestellte, Öffnungen in dem Oberflächenmaterial, beispielsweise dem Dornmaterial, vorzusehen, wobei die Öffnungen z.B. durch Bohren, Schneiden, Lasern und/oder Stanzen herstellbar sind. Gemäß einer zweiten, bevorzugten Variante zur Ausbildung der Gasaustrittsöffnung wird poröses, insbesondere nano- und/oder mikroporöses, Material eingesetzt, welches sich durch eine offenporige Struktur auszeichnet. Das poröse Material kann metallisch und/oder keramisch und/oder aus Kunststoff ausgebildet sein. Besonders zweckmäßig ist es, wenn es sich bei dem porösen Material um Sintermaterial oder durch thermisches Spritzen hergestelltes Material oder einen Metallschaum oder einen Keramikschaum handelt. Besonders geeignet als Werkstoff für nano- und/oder mikroporöses Material haben sich nickelbasierte Werkstoffe herausgestellt. Zusätzlich oder alternativ können als nanoporöse und/oder mikroporöse Materialien Aluminiumoxide, Siliziumoxide, Zirkonoxide, Titanoxide oder Mischungen daraus eingesetzt werden. Auch ist es möglich, einen mehrschichtigen Aufbau zu wählen, wobei auf einem Trägermaterial, insbesondere einem Metallschaum, poröses Material, insbesondere nano- und/oder mikroporöses Material aufgebracht ist, welches beispielsweise gesintert oder durch thermisches Spritzen oder Schäumen mit Treibgas hergestellt werden kann. Als besonders vorteilhaft hat es sich erwiesen, wenn die Porengröße der Poren des nano- oder mikroporösen Materials, insbesondere eines Metallschaums, hin zur dem Schweißband zugeordneten Oberfläche abnimmt. Alternativ ist es möglich, das mikroporöse und/oder nanoporöse Material selbsttragend auszubilden.

Im Falle des Einsatzes von mikroporösem Material hat es sich als vorteilhaft herausgestellt, wenn der mittlere Porendurchmesser (mittlerer Querschnitt) und damit der Durchmesser der Gasaustrittsöffnungen aus einem Wertebereich zwischen 0,05 µm und 2 mm, besonders bevorzugt zwischen 0,1 µm und 1 mm, noch weiter bevorzugt zwischen 0,1 µm und 500 µm, ganz besonders bevorzugt zwischen 1 µm und 100 µm gewählt ist. Im Falle des Einsatzes von nanoporösem Material ist dieses bevorzugt derart beschaffen, dass in diesem Nanomaterial gasdurchlässige Zwischenräume (Poren) ausgebildet sind, deren mittlere Querschnitte im Bereich zwischen 1 nm und 100 nm liegen. Insbesondere weist das Nanomaterial dabei eine mittlere Molekülgröße (mittlerer Moleküldurchmesser) zwischen 1 nm und 100 nm auf, vorzugsweise kleiner oder gleich 50 nm.

Für den Fall des Vorsehens eines inneren, d.h. abschnittsweise im Inneren der Rohrform verlaufenden, Schweißbandes hat es sich als vorteilhaft herausgestellt, wenn die feste, dem Schweißband zugeordnete und mit Gasaustrittsöffnungen versehene Oberfläche von einer Dornoberfläche gebildet ist. Besonders zweckmäßig ist es dabei, wenn dem inneren Schweißband eine vorzugsweise im Dorn vorgesehene Längsnut zugeordnet ist und wenn die die Gasaustrittsöffnungen aufweisende Oberfläche vom Nutboden dieser Nut gebildet ist.

Im Falle des Vorsehens eines äußeren Schweißbandes hat es sich als vorteilhaft herausgestellt, wenn die dem Schweißband zugeordnete, Gasaustrittsöffnungen aufweisende Oberfläche an den, vorzugsweise als HF-Schweißmitteln ausgebildeten, Schweißmittel realisiert ist, um einen optimalen Wärmeübergang von den Schweißmitteln in das Schweißband zu gewährleisten. Zusätzlich oder alternativ kann eine Gasaustrittsöffnungen aufweisende, dem Schweißband zugeordnete Oberfläche an einer, vorzugsweise senkrecht zur Substratlaufrichtung verstellbare und/oder einstell- bzw. positionierbare Presseinrichtung ausgebildet sein, die nach dem Schweißvorgang einen Anpressdruck auf das Schweißband mit darunter befindlicher, geschweißter Substratbahn verursacht. Auch ist es möglich, eine Gasaustrittsöffnungen aufweisende Oberfläche zur Erzeugung eines Luftkissens zwischen der Oberfläche und dem Schweißband an einer Kühleinrichtung, insbesondere an deren Kühlflächen, auszubilden, wobei es besonders zweckmäßig ist, wenn durch die Gasaustrittsöffnungen, zumindest im Bereich der Kühleinrichtung, im Vergleich zur heißen Schweißnaht kühleres Gas, insbesondere kühlere Druckluft, austritt.

Als besonders zweckmäßig hat es sich erwiesen, den Gasvolumenstrom so einzustellen, dass ein Luftkissen mit einer Dicke von weniger als 50 µm resultiert. Bevorzugt beträgt die Dickenerstreckung des Gaskissens zwischen etwa 2 µm und etwa 50 µm, vorzugsweise zwischen etwa 5 µm und etwa 30 µm. Besonders zweckmäßig ist es, wenn die Dickenerstreckung des Gaskissens etwa 10 µm beträgt.

Als besonders vorteilhaft hat es sich herausgestellt, wenn mindestens zwei, vorzugsweise axial beabstandete Bereiche von Gasaustrittsöffnungen, vorzugsweise zwei Bereiche einer gemeinsamen Oberfläche, unabhängig voneinander mit Gas beaufschlagbar sind, um die resultierenden Gaskissen hinsichtlich ihrer Beschaffenheit, beispielsweise Dickenerstreckung und/oder Temperatur, unterschiedlich zu gestalten.

Das Vorsehen eines Gaskissens kann weiterbildungsgemäß zum Erhitzen und/oder Kühlen des Schweißbandes genutzt werden. So ist es beispielsweise denkbar, im Schweißbereich oder einem in Transportrichtung vor dem Schweißbereich vorgesehenen Bereich das Schweißband durch eine geeignete Erwärmung des Gasvolumenstroms und damit des Luftkissens zu erwärmen, insbesondere vorzuerwärmen. Zusätzlich oder alternativ kann durch Gasaustrittsöffnungen, insbesondere in einem in Transportrichtung den Schweißmitteln nachgelagerten Bereich, kühle Luft ausgeblasen werden, um über das Gaskissen das Schweißband herabzukühlen.

Die Erfindung führt auch auf ein Verfahren zum Betreiben einer erfindungsgemäßen Vorrichtung zum Herstellen von Tubenkörpern mit mindestens einem Schweißband, wobei mindestens ein Schweißband durch Ausblasen von Gas, insbesondere Luft, durch die Gasaustrittsöffnungen in der dem Schweißband zugeordneten festen Oberfläche auf einem Gaskissen gelagert wird. Im Falle des Vorsehens von zwei Schweißbändern ist es vorteilhaft, jedoch nicht zwingend, beide Schweißbänder jeweils auf einem Gaskissen, insbesondere einem Luftkissen, zu lagern.

Als besonders zweckmäßig hat es sich herausgestellt, wenn die Gasbeaufschlagungsparameter, insbesondere Druck und/oder Volumenstrom des Gases, so eingestellt werden, dass ein Gaskissen mit einer Dickenerstreckung zwischen etwa 2 µm und etwa 50 µm, vorzugsweise zwischen etwa 5 µm und etwa 30 µm, ganz besonders bevorzugt von etwa 10 µm resultiert, sodass ein vergleichsweise geringer Abstand zwischen dem Schweißband und der Oberfläche eingestellt wird, um den Wärmeübergang zu verbessern.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine stark schematisierte Längsschnittansicht durch eine Vorrichtung zum Herstellen von Tubenkörpern für Verpackungstuben aus einer Kunststoffsubstratbahn und
- Fig. 2:: eine Querschnittsansicht durch eine Vorrichtung zum Herstellen von Tubenkörpern.

In den Figuren sind gleiche Elemente und Elemente mit der gleichen Funktion mit den gleichen Bezugszeichen gekennzeichnet.

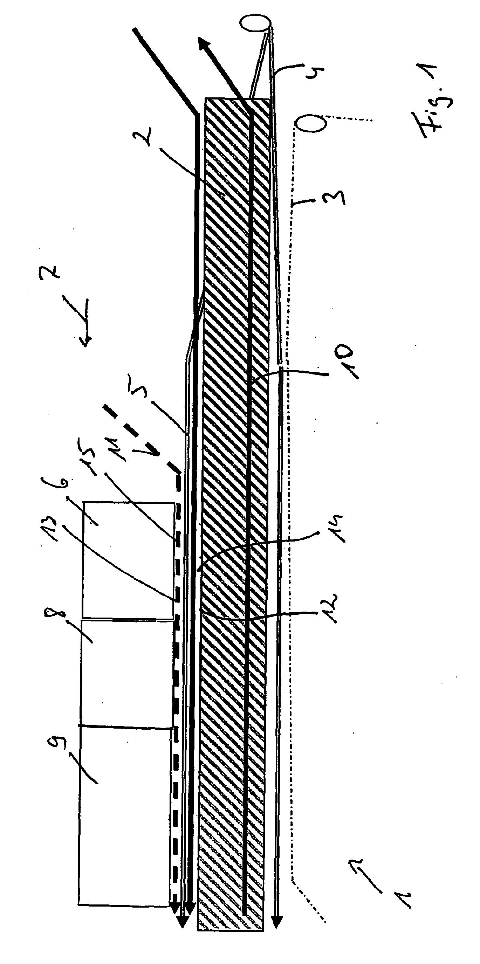

In Fig. 1 ist in einer stark schematisierten Längsschnittansicht eine Vorrichtung zum Herstellen von Tubenkörpern gezeigt. Die Vorrichtung 1 umfasst einen langgestreckten Dorn 2, um den mit hier als Formband ausgebildeten Formmitteln 3 eine hier als Kunststofflaminat ausgebildete Substratbahn 4 zu einer Rohrform 5 umformbar ist, die dann mit Schweißmitteln 6, insbesondere einer HF-Schweißeinrichtung, mit sich selbst verschweißbar ist. Mit den Schweißmitteln 6 werden die aneinander anstoßenden oder einander überlappenden Randbereiche miteinander verschweißt, und es entsteht eine sich entlang des Dorns 2 erstreckende bzw. entlang des Dorns 2 wandernde Schweißnaht. In dem gezeigten Ausführungsbeispiel ist den Schweißmittel 6 in einer Transportrichtung 7 der Substratbahn 4 eine Presseinrichtung 8 nachgeordnet, die einen einstellbaren Anpressdruck auf die frisch verschweißte Rohrform aufbringt. Der Presseinrichtung 8 wiederum ist eine Kühleinrichtung 9 nachgeordnet.

Ferner ist aus Fig. 1 zu erkennen, dass die Vorrichtung 1 insgesamt zwei Schweißbänder aufweist, nämlich ein sogenanntes inneres Schweißband 10, welches abschnittsweise innerhalb des Dorns 2 verläuft, und ein äußeres Schweißband 11. Inneres und äußeres Schweißband 10, 11 nehmen die zur Rohrform 5 umgeformte Substratbahn 4 sandwichartig zwischen sich auf und werden umlaufend angetrieben, vorzugsweise zumindest näherungsweise mit der Substratbahngeschwindigkeit. Sowohl bei dem inneren Schweißband 10 als auch bei dem äußeren Schweißband 11 handelt es sich um Stahlbänder, die gegenüber feststehenden Oberflächen bewegt werden. Dabei wird das innere Schweißband 10 gegenüber einer inneren, von dem Dorn 2 gebildeten Oberfläche 12 verstellt und das äußere Schweißband 11 gegenüber einer äußeren Oberfläche 13, die, wie später noch erläutert werden wird, von unterschiedlichen Bauteilen gebildet ist.

Zur Minimierung der Reibung zwischen dem inneren Schweißband 10 und der inneren Oberfläche 12 wird zwischen der inneren Oberfläche 12 und dem inneren Schweißband 10 ein inneres Gaskissen 14, hier ein Luftkissen, erzeugt und zwischen der äußeren Oberfläche 13 und dem äußeren Schweißband 11 ein äußeres Gaskissen 15, hier ein äußeres Luftkissen. Zur Erzeugung der jeweiligen Gaskissen 14, 15 sind in den Oberflächen 12, 13, zumindest abschnittsweise, in Fig. 1 nicht gezeigte Gasaustrittsöffnungen vorgesehen, durch die Gas ausströmen kann, welches dann zwischen dem jeweiligen Schweißband und der zugehörigen, feststehenden Oberfläche das Gaskissen erzeugt. Lediglich klarstellend sei hier erwähnt, dass es bevorzugt ist, an möglichst vielen Stellen Gasaustrittsöffnungen vorzusehen. Es ist jedoch auch denkbar, lediglich lokal, beispielsweise nur in einem dem inneren Schweißband zugeordneten Bereich oder einem dem äußeren Schweißband zugeordneten Bereich, ein das Schweißband lagerndes Gaskissen zu erzeugen.

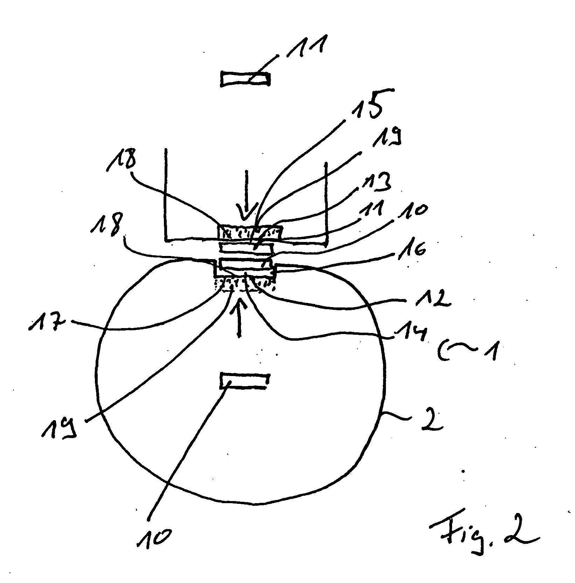

In Fig. 2 ist eine Querschnittsansicht der Vorrichtung 1 gemäß Fig. 1 gezeigt. Zu erkennen ist der langgestreckte Dorn 2, um den die in Fig. 2 aus Übersichtlichkeitsgründen nicht gezeigte Substratbahn umformbar ist. In dem Dorn 2 ist eine als Längsnut ausgebildete Nut 16 vorgesehen, deren Nutboden 17 in dem gezeigten Ausführungsbeispiel die innere Oberfläche 12 bildet, die mit einer Vielzahl von Gasaustrittsöffnungen versehen ist. Die Gasaustrittsöffnungen 18 werden gebildet von Poren in einem porösen Material 19, durch das von der Dorninnenseite her über eine geeignete Gaszuführung Druckgas ausgeblasen werden kann, um hierdurch zwischen dem inneren Schweißband 10, welches im oberen Bereich der Nut 16 verläuft, und dem Nutboden 17, genauer der inneren Oberfläche 12, ein inneres Gaskissen 14 zu erzeugen. Es ist denkbar, dass zwei, insbesondere axial aufeinanderfolgende Bereiche der Dornoberfläche, genauer in diesen vorgesehene Gasaustrittsöffnungen, unabhängig voneinander mit Druckgas beaufschlagbar sind, wobei beispielsweise in einem in Transportrichtung des Substrates vorderen Bereich erwärmte Luft mit einer Temperatur, von vorzugsweise mehr als 40°C, noch weiter bevorzugt mehr als 60° durch Gasaustrittsöffnungen zum Erzeugen eines heißen Gaskissens strömt und in einem in Transportrichtung hinteren Bereich durch Gasaustrittsöffnungen deutlich kühlere Luft ausströmt, von vorzugsweise weniger als 30°C zur Kühlung des Schweißbandes und damit der Schweißnaht. Auch ist es denkbar, dass mindestens zwei Abschnitte der äußeren Oberfläche unabhängig voneinander mit Druckgas, insbesondere unterschiedlicher Temperatur beaufschlagbar sind, beispielsweise um im Bereich der Schweißmittel 6 oder in einem davor angeordneten Bereich bewusst Wärme einzutragen, insbesondere durch Ausblasen von Gas, insbesondere Luft mit einer Temperatur von über 40°C, noch weiter bevorzugt von über 60°C. Im Bereich der Presseinrichtung und/oder im Bereich der Kühleinrichtung kann dann bevorzugt kühlere Luft durch die entsprechenden Gasaustrittsöffnungen 18 ausgeblasen werden, um die Kühlwirkung zu unterstützen. Zu erkennen ist, dass das innere Schweißband 10 in einem Bereich innerhalb des Dorns entgegen der Transportrichtung zurückläuft.

Unmittelbar oberhalb des inneren Schweißbandes 10 befindet sich das äußere Schweißband 11, welches im Betrieb gemeinsam mit dem inneren Schweißband 10 die Rohrform 5 im Bereich der Schweißnaht klemmt. Dem äußeren Schweißband 11 ist eine äußere Oberfläche 13 mit Gasaustrittsöffnungen 18 zugeordnet, die vorzugsweise ebenfalls von porösem Material 19 gebildet sind, durch welches Gas über geeignete Gaszuführleitungen ausströmen kann, um zwischen dem äußeren Schweißband 11 und der äußeren Oberfläche 13 ein äußeres Gaskissen 15 zu erzeugen. Die äußere Oberfläche 13 kann beispielsweise von den Schweißmitteln 6 und/oder der Presseinrichtung 8 und/oder der Kühleinrichtung 9 (vergleiche Fig. 1) gebildet werden.

### Bezugszeichenliste

- 1: Vorrichtung
- 2: Dorn
- 3: Formmittel (Umformmittel)
- 4: Substratbahn
- 5: Rohrform
- 6: Schweißmittel
- 7: Transportrichtung
- 8: Presseinrichtung
- 9: Kühleinrichtung
- 10: inneres Schweißband
- 11: äußeres Schweißband
- 12: innere Oberfläche
- 13: äußere Oberfläche
- 14: inneres Gaspolster
- 15: äußeres Gaspolster
- 16: Nut
- 17: Nutboden
- 18: Gasaustrittsöffnungen
- 19: poröses Material

## Patentansprüche

1. Vorrichtung (1) zum Herstellen von Tubenkörpern für Verpackungstuben aus einer Substratbahn (4), mit einem sich in eine Axialrichtung erstreckenden, langgestreckten Dorn (2), um welchen die Substratbahn (4) zur Herstellung einer Rohrform (5) umformbar ist, und mit Schweißmitteln (6) zum Verschweißen der Substratbahn (4) sowie mit mindestens einem entlang einer Oberfläche (12, 13) umlaufend antreibbaren Schweißband (10, 11)
**dadurch gekennzeichnet,**
**dass** in der Oberfläche (12, 13) Gasaustrittsöffnungen (18) vorgesehen sind, durch die Gas zum Erzeugen eines Gaskissens (14, 15) zwischen der Oberfläche (12) und dem dieser zugeordneten Schweißband (10, 11) austreten kann.

2. Vorrichtung (1) nach Anspruch 1,
**dadurch gekennzeichnet,**
**dass** insgesamt zwei Schweißbänder (10, 11) derart vorgesehen sind, dass die Substratbahn (4) zwischen den Schweißbändern (10, 11) sandwichartig aufnehmbar ist und/oder zumindest einem der Schweißbänder (10, 11), vorzugsweise beiden Schweißbändern (10, 11), jeweils mindestens eine Oberfläche (12, 13) mit Gasaustrittsöffnungen (18) zugeordnet ist/sind, durch die Gas zum Erzeugen eines Gaskissens (14, 15) zwischen der Oberfläche (12, 13) und dem zugehörigen Schweißband (10, 11) austreten kann.

3. Vorrichtung (1) nach einem der Ansprüche 1 oder 2, ,
**dadurch gekennzeichnet,**
**dass** die Gasaustrittsöffnungen (18) unmittelbar unterhalb des Schweißbandes (10, 11) angeordnet sind, so dass das erste Schweißband (10) unmittelbar anströmbar ist.

4. Vorrichtung (1) nach einem der vorhergehenden Ansprüche,
**dadurch gekennzeichnet,**
**dass** den Gasaustrittsöffnungen (18) Druckgasmittel, insbesondere Druckluftmittel, zum Erzeugen des Gaskissens (14, 15), insbesondere des Luftkissen, zugeordnet sind.

5. Vorrichtung (1) nach einem der vorhergehenden Ansprüche,
**dadurch gekennzeichnet,**
**dass** den Gasaustrittsöffnungen (18), vorzugsweise als nanoporöses und/oder mikroporöses Material ausgebildetes, poröses Material (19) zugeordnet ist, durch dessen Poren das Gas zu den, vorzugsweise in dem porösen Material (19) ausgebildeten, Gasaustrittsöffnungen (18) strömen kann.

6. Vorrichtung (1) nach Anspruch 5,
**dadurch gekennzeichnet,**
**dass** das poröse Material (19) ein Sintermaterial, oder ein durch thermisches Spritzen hergestelltes Material, oder einen Metallschaum, oder einen Kunststoffschaum, insbesondere einen Polyurethanschaum, oder einen Keramikschaum umfasst oder ist.

7. Vorrichtung (1) nach einem der vorhergehenden Ansprüche,
**dadurch gekennzeichnet,**
**dass** der mittlere Durchmesser der Gasaustrittsöffnungen (18), zumindest in einem Flächenabschnitt, aus einem Wertebereich zwischen 1 nm und 2mm, insbesondere aus einem Wertebereich zwischen 1 nm und 100nm oder aus einem Wertebereich zwischen 0,05 µm und 1 mm gewählt ist.

8. Vorrichtung (1) nach einem der vorhergehenden Ansprüche,
**dadurch gekennzeichnet,**
**dass** die Oberfläche (12, 13) mit Gasaustrittsöffnungen (18) zumindest abschnittsweise von einer Dornoberfläche, vorzugsweise von einem Nutboden (17) einer das Schweißband (10, 11) abschnittsweise aufnehmenden Nut (16) im Dorn (2), gebildet ist.

9. Vorrichtung (1) nach einem der vorhergehenden Ansprüche,
**dadurch gekennzeichnet,**
**dass** die Oberfläche (12, 13) mit Gasaustrittsöffnungen (18) an den Schweißmitteln (6) und/oder an einer den Schweißmitteln (6) in der Transportrichtung (7) des Substrates nachgeordneten Presseinrichtung (8) zum Andrücken eines zuvor mit den Schweißmittein (6) aufgeschmolzenen Schweißbereichs vorgesehen ist und/oder an einer den Schweißmitteln (6) in der Transportrichtung (7) des Substrates nachgeordneten Kühleinrichtung (9) vorgesehen ist.

10. Vorrichtung (1) nach einem der vorhergehenden Ansprüche,
**dadurch gekennzeichnet,**
**dass** ein Gaskissen (14) zwischen dem inneren Schweißband (10) und der ersten Oberfläche (12) und/oder ein Gaskissen (15) zwischen dem äußeren Schweißband (11) und der zweiten Oberfläche (13) zwischen 2µm und 50µm, vorzugsweise zwischen 5µm und 30µm, bevorzugt 10µm beträgt.

11. Vorrichtung (1) nach einem der vorhergehenden Ansprüche,
**dadurch gekennzeichnet,**
**dass** mindestens zwei Bereiche von Gasaustrittsöffnungen (18) unabhängig voneinander mit Gas beaufschlagbar sind und/oder mit unterschiedlichen Gastemperaturen.

12. Vorrichtung (1) nach einem der vorhergehenden Ansprüche,
**dadurch gekennzeichnet,**
**dass** Gastemperiermittel zum Erhitzen und/oder Kühlen des zu den Gasaustrittsöffnungen (18) geleiteten Gasstroms vorgesehen sind.

13. Verfahren zum Betreiben einer Vorrichtung (1) zum Herstellen von Tubenkörpern aus einer Substratbahn (4) nach einem der vorhergehenden Ansprüche,
**dadurch gekennzeichnet,**
**dass** das Schweißband (10, 11) durch Ausblasen von Gas, insbesondere Luft, durch die Gasaustrittsöffnungen (18) auf einem Gaskissen (14, 15) gelagert wird.

14. Verfahren nach Anspruch 13,
**dadurch gekennzeichnet,**
**dass** insgesamt zwei Schweißbänder (10, 11) durch Ausblasen von Gas, insbesondere Luft, durch die Gasaustrittsöffnungen (18) auf einem Gaskissen (14, 15) gelagert werden.

15. Verfahren nach einem der Ansprüche 13 oder 14,
**dadurch gekennzeichnet,**
**dass** das Gaskissen (14,15), insbesondere durch die Wahl, insbesondere das Einstellen des Gasvolumens und/oder das Gasdrucks, auf eine Dicke zwischen 2µm und 50µm, vorzugsweise zwischen 5µm und 30µm, und/oder von 10µm eingestellt wird.

## Claims

1. A device (1) for manufacturing tubular bodies for packaging tubes from a substrate web (4), with an elongated mandrel (2) extending in an axial direction, around which the substrate web (4) is able to be shaped for producing a tubular shape (5), and with weld means (6) for welding the substrate web (4) and with at least one weld band (10, 11) able to be driven in a revolving manner along a surface (12, 13),
**characterized in that**
in the surface (12, 13) gas outlet openings (18) are provided, through which gas for generating a gas cushion (14, 15) can emerge between the surface (12) and the weld band (10, 11) associated therewith.

2. The device (1) according to claim 1,
**characterized in that**
a total of two weld bands (10, 11) are provided such that the substrate web (4) is able to be received in the manner of a sandwich between the weld bands (10, 11) and/or respectively at least one surface (12, 13) with gas outlet openings (18) is/are associated with at least one of the weld bands (10, 11), preferably with both weld bands (10, 11), through which gas outlet openings gas for generating a gas cushion (14, 15) can emerge between the surface (12, 13) and the associated weld band (10, 11).

3. The device (1) according to one of claims 1 or 2,
**characterized in that**
the gas outlet openings (18) are arranged directly beneath the weld band (10, 11), so that the first weld band (10) is able to be flowed against directly.

4. The device (1) according to one of the preceding claims,
**characterized in that**
compressed gas means, in particular compressed air means, are associated with the gas outlet openings (18) for generating the gas cushion (14, 15), in particular the air cushion.

5. The device (1) according to one of the preceding claims,
**characterized in that**
porous material (19), preferably constituted as nanoporous and/or microporous material, is associated with the gas outlet openings (18), through the pores of which material the gas can flow to the gas outlet openings (18) formed preferably in the porous material (19).

6. The device (1) according to claim 5,
**characterized in that**
the porous material (19) comprises or is a sintered material, or a material produced by thermal spraying, or a metal foam, or a plastic foam, in particular a polyurethane foam, or a ceramic foam.

7. The device (1) according to one of the preceding claims,
**characterized in that**
the mean diameter of the gas outlet openings (18), at least in one surface section, is selected from a range of values between 1 nm and 2 mm, in particular from a range of values between 1 nm and 100 nm or from a range of values between 0.05 µm and 1 mm.

8. The device (1) according to one of the preceding claims,
**characterized in that**
the surface (12, 13) with gas outlet openings (18) is formed at least in part by a mandrel surface, preferably by a groove base (17) of a groove (16), receiving in part the weld band (10, 11), in the mandrel (2).

9. The device (1) according to one of the preceding claims,
**characterized in that**
the surface (12, 13) with gas outlet openings (18) is provided at the weld means (6) and/or at a pressing device (8) arranged after the weld means (6) in the transport direction (7) of the substrate, for pressing against a weld region which is previously fused by the weld means (6) and/or at a cooling device (9) arranged after the weld means (6) in the transport direction (7) of the substrate.

10. The device (1) according to one of the preceding claims,
**characterized in that**
a gas cushion (14) between the inner weld band (10) and the first surface (12) and/or a gas cushion (15) between the outer weld band (11) and the second surface (13) is between 2 µm and 50 µm, particularly between 5 µm and 30 µm, preferably 10 µm.

11. The device (1) according to one of the preceding claims,
**characterized in that**
at least two regions of gas outlet openings (18) are able to be acted upon by gas independently of one another and/or with different gas temperatures.

12. The device (1) according to one of the preceding claims,
**characterized in that**
gas temperature control means are provided for heating and/or cooling the gas stream which is directed to the gas outlet openings (18).

13. A method for operating a device (1) for manufacturing tubular bodies from a substrate web (4) according to one of the preceding claims,
**characterized in that**
the weld band (10, 11) is mounted on a gas cushion (14, 15) by the blowing out of gas, in particular air, through the gas outlet openings (18).

14. The method according to claim 13,
**characterized in that**
a total of two weld bands (10, 11) are mounted on a gas cushion (14, 15) by the blowing out of gas, in particular air, through the gas outlet openings (18).

15. The method according to one of claims 13 or 14,
**characterized in that**
the gas cushion (14, 15) is set to a thickness of between 2 µm and 50 µm, preferably between 5 µm and 30 µm, and/or of 10 µm, in particular by the selection, in particular the setting of the gas volume and/or the gas pressure.

## Revendications

1. Dispositif (1) de fabrication de corps tubulaires pour des tubes d'emballage à partir d'une nappe de substrat (4), comprenant un mandrin (2) allongé, s'étendant dans une direction axiale, autour duquel la nappe de substrat (4) peut être mise en forme pour produire une forme tubulaire (5) et comprenant des moyens de soudage (6) pour souder la nappe de substrat (4) et au moins une bande de soudage (10, 11) pouvant être entraînée en rotation le long d'une surface (12, 13), **caractérisé en ce que** des ouvertures de sortie de gaz (18) sont prévues dans la surface (12, 13), à travers lesquelles du gaz peut sortir pour générer un coussin de gaz (14, 15) entre la surface (12) et la bande de soudage (10, 11) associée à celle-ci.

2. Dispositif (1) selon la revendication 1, **caractérisé en ce que** deux bandes de soudage (10, 11) au total sont prévues de telle sorte que la nappe de substrat (4) puisse être reçue en sandwich entre les bandes de soudage (10, 11) et/ou à chaque fois au moins une surface (12, 13) avec des ouvertures de sortie de gaz (18) étant associée(s) à au moins l'une des bandes de soudage (10, 11), de préférence aux deux bandes de soudage (10, 11), à travers lesquelles ouvertures du gaz peut sortir pour générer un coussin de gaz (14, 15) entre la surface (12, 13) et la bande de soudage associée (10, 11).

3. Dispositif (1) selon l'une quelconque des revendications 1 ou 2, **caractérisé en ce que** les ouvertures de sortie de gaz (18) sont disposées directement en dessous de la bande de soudage (10, 11) de telle sorte que la première bande de soudage (10) puisse recevoir l'écoulement directement.

4. Dispositif (1) selon l'une quelconque des revendications précédentes, **caractérisé en ce que** des moyens de gaz sous pression, notamment des moyens d'air sous pression, sont associés aux ouvertures de sortie de gaz (18) pour générer le coussin de gaz (14, 15), en particulier le coussin d'air.

5. Dispositif (1) selon l'une quelconque des revendications précédentes, **caractérisé en ce qu'**un matériau poreux (19), réalisé de préférence sous forme de matériau nanoporeux et/ou microporeux, est associé aux ouvertures de sortie de gaz (18), à travers les pores duquel le gaz peut s'écouler jusqu'aux ouvertures de sortie de gaz (18) réalisées de préférence dans le matériau poreux (19).

6. Dispositif (1) selon la revendication 5, **caractérisé en ce que** le matériau poreux (19) est ou comprend un matériau fritté ou un matériau fabriqué par pulvérisation thermique, ou une mousse métallique, ou une mousse de plastique, en particulier une mousse de polyuréthane, ou une mousse céramique.

7. Dispositif (1) selon l'une quelconque des revendications précédentes, **caractérisé en ce que** le diamètre moyen des ouvertures de sortie de gaz (18), au moins dans une portion de surface, est choisi dans une plage de valeurs comprise entre 1 nm et 2 mm, notamment dans une plage de valeurs comprise entre 1 nm et 100 nm ou dans une plage de valeurs comprise entre 0,05 µm et 1 mm.

8. Dispositif (1) selon l'une quelconque des revendications précédentes, **caractérisé en ce que** la surface (12, 13) avec les ouvertures de sortie de gaz (18) est formée au moins en partie par une surface de mandrin, de préférence par un fond de rainure (17) d'une rainure (16) dans le mandrin (2), recevant en partie la bande de soudage (10, 11).

9. Dispositif (1) selon l'une quelconque des revendications précédentes, **caractérisé en ce que** la surface (12, 13) avec les ouvertures de sortie de gaz (18) est prévue au niveau des moyens de soudage (6) et/ou au niveau d'un dispositif de pressage (8) placé derrière les moyens de soudage (6) dans la direction de transport (7) du substrat, pour presser une région de soudage préalablement fondue avec les moyens de soudage (6), et/ou est prévue au niveau d'un dispositif de refroidissement (9) placé derrière les moyens de soudage (6) dans la direction de transport (7) du substrat.

10. Dispositif (1) selon l'une quelconque des revendications précédentes, **caractérisé en ce qu'**un coussin de gaz (14) entre la bande de soudage interne (10) et la première surface (12) et/ou un coussin de gaz (15) entre la bande de soudage externe (11) et la deuxième surface (13) vaut entre 2 µm et 50 µm, de préférence entre 5 µm et 30 µm, de préférence vaut 10 µm.

11. Dispositif (1) selon l'une quelconque des revendications précédentes, **caractérisé en ce qu'**au moins deux régions d'ouvertures de sortie de gaz (18) peuvent être sollicitées avec du gaz et/ou avec différentes températures de gaz indépendamment les unes des autres.

12. Dispositif (1) selon l'une quelconque des revendications précédentes, **caractérisé en ce que** des moyens de régulation de la température du gaz sont prévus pour chauffer et/ou refroidir le flux de gaz guidé vers les ouvertures de sortie de gaz (18).

13. Procédé pour faire fonctionner un dispositif (1) pour fabriquer des corps tubulaires à partir d'une nappe de substrat (4) selon l'une quelconque des revendications précédentes, **caractérisé en ce que** la bande de soudage (10, 11) est supportée sur un coussin de gaz (14, 15) par soufflage de gaz, en particulier d'air, à travers les ouvertures de sortie de gaz (18).

14. Procédé selon la revendication 13, **caractérisé en ce que** deux bandes de soudage (10, 11) au total sont supportées sur un coussin de gaz (14, 15) par soufflage de gaz, en particulier d'air, à travers les ouvertures de sortie d'air (18).

15. Procédé selon l'une quelconque des revendications 13 ou 14, **caractérisé en ce que** le coussin de gaz (14, 15) est ajusté, en particulier par le choix, en particulier par l'ajustement du volume de gaz et/ou de la pression de gaz, à une épaisseur entre 2 µm et 50 µm, de préférence entre 5 µm et 30 µm et/ou de 10 µm.
